(19) Europäisches Patentamt / European Patent Office / Office européen des brevets

(11) **EP 4 314 979 B1**

(12) **FASCICULE DE BREVET EUROPEEN**

(45) Date de publication et mention de la délivrance du brevet:
**23.04.2025 Bulletin 2025/17**

(21) Numéro de dépôt: **22712020.1**

(22) Date de dépôt: **02.03.2022**

(51) Classification Internationale des Brevets (IPC):
**G05D 16/20** *(2006.01)*

(52) Classification Coopérative des Brevets (CPC):
**G05D 16/2013;** Y02B 30/70

(86) Numéro de dépôt international:
**PCT/FR2022/050372**

(87) Numéro de publication internationale:
**WO 2022/200710 (29.09.2022 Gazette 2022/39)**

(54) **PROCÉDÉ DE COMMANDE D'UN ACTIONNEUR ÉLÉCTROMAGNÉTIQUE D'UN DÉTENDEUR, ET ACTIONNEUR ET DÉTENDEUR CONFIGURÉ POUR METTRE EN OEUVRE LEDIT PROCÉDÉ**

VERFAHREN ZUM STEUERN EINES ELEKTROMAGNETISCHEN AKTORS EINES EXPANSIONSVENTILS UND AKTOR UND EXPANSIONSVENTIL, DIE KONFIGURIERT SIND, UM EIN SOLCHES VERFAHREN ZU IMPLEMENTIEREN

METHOD FOR CONTROLLING AN ELECTROMAGNETIC ACTUATOR OF AN EXPANSION VALVE, AND ACTUATOR AND EXPANSION VALVE CONFIGURED TO IMPLEMENT SUCH METHOD

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **23.03.2021 FR 2102892**

(43) Date de publication de la demande:
**07.02.2024 Bulletin 2024/06**

(73) Titulaires:
- **Centre National d'Études Spatiales**
  **75039 Paris Cedex 01 (FR)**
- **Conception de Systemes et Technologie Mecanique (CSTM)**
  **31320 Castanet Tolosan (FR)**
- **Institut Catholique d'Arts et Metiers (ICAM)**
  **31300 Toulouse (FR)**
- **Centre National de la Recherche Scientifique**
  **75016 Paris (FR)**

(72) Inventeurs:
- **DESCHAUX, Flavien**
  **31520 RAMONVILLE-SAINT-AGNE (FR)**
- **ARIBA, Yassine**
  **31450 DEYME (FR)**
- **DE SEZE, Damien**
  **31540 MONTLAUR (FR)**
- **GOUAISBAUT, Frédéric**
  **31400 TOULOUSE (FR)**
- **DUGUE, François**
  **31450 POMPERTUZAT (FR)**

(74) Mandataire: **Germain Maureau**
**12, rue Boileau**
**69006 Lyon (FR)**

(56) Documents cités:
**FR-A1- 3 007 855      US-A1- 2013 085 618**
**US-A1- 2013 333 671**

EP 4 314 979 B1

**Description**

La présente invention concerne le domaine des actionneurs électromagnétiques, configurés en particulier pour actionner un détendeur à commande électronique, plus particulièrement un tel détendeur adapté pour réguler la pression d'un fluide en aval du détendeur.

Il est connu d'utiliser un actionneur électromagnétique pour actionner un détendeur. Il est en particulier connu de commander l'actionneur selon une tension déterminée pour produire une force électromagnétique donnée et obtenir ainsi un positionnement précis d'un clapet de soupape d'un détendeur, par exemple, ou d'un piston de pompe, ou pour d'autres applications de l'actionneur électromagnétique, par exemple pour le contrôle actif antivibratoire d'une structure (voir FR 3 007 855 A1).

La loi de commande pour les actionneurs électromagnétiques connus ne permet cependant pas d'obtenir un débit précis à partir d'une position de clapet donnée. L'invention a donc pour but de proposer une solution à tout ou partie de ces problèmes.

A cet effet, la présente invention concerne un détendeur à commande électronique, du type comportant une vanne commandée insérée entre une source de fluide à une première pression et une sortie de fluide à une seconde pression, la seconde pression étant inférieure à la première pression, un capteur de pression adapté pour mesurer la seconde pression et un calculateur de commande adapté pour commander la vanne de telle sorte que la vanne génère une perte de charge entre la source de fluide et la sortie permettant d'asservir la seconde pression à une pression de consigne;

- la vanne commandée comprenant un actionneur adapté pour restreindre une section de passage du fluide, entre la source et la sortie de fluide, de manière à faire varier ladite section de passage,
- la restriction se faisant au moyen d'un orifice de passage du fluide et d'un organe obturateur placé dans l'axe de l'orifice et agencé pour qu'un déplacement axial de l'organe obturateur entraine une variation de la section de passage du fluide,
- l'organe obturateur étant entraîné par l'actionneur,
- le détendeur comportant un capteur de position de l'organe obturateur, caractérisé en ce que le calculateur de commande est adapté pour faire converger, selon une première loi de commande, la position de l'organe obturateur vers une position de consigne, la position de consigne étant déterminée par une deuxième loi de commande pour faire converger la seconde pression vers la pression de consigne, sur la base d'un modèle d'un débit du détendeur, le débit du détendeur étant le débit du fluide s'écoulant à travers la section de passage entre le détendeur et la sortie de fluide, ledit modèle du débit du détendeur étant défini en fonction de la position de l'organe obturateur, ladite deuxième loi de commande étant déterminée en outre sur la base d'un modèle de la seconde pression fonction du débit du détendeur et d'un débit de consommation en aval de la sortie de fluide.

Selon un mode de réalisation, l'invention comprend une ou plusieurs des caractéristiques suivantes, seules ou en combinaison techniquement acceptable.

Selon un mode de réalisation, la dynamique de l'organe obturateur n'est pas prise en compte, autrement dit dans lequel la première loi de commande est telle que la position de l'organe obturateur est égale à la position de consigne, et dans lequel le modèle de la seconde pression est un modèle linéaire, sans saturation du débit.

Selon un mode de réalisation, le modèle linéaire sans saturation du débit est défini par l'équation :

[Math.1]

$$\dot{P}_2 \;=\; K_s \Big( D_{col} - D_s \Big)$$

Selon un mode de réalisation, la dynamique de l'organe obturateur n'est pas prise en compte, autrement dit dans lequel la première loi de commande est telle que la position de l'organe obturateur est égale à la position de consigne, et dans lequel le modèle de la seconde pression est un modèle linéaire, avec saturation du débit.

Selon un mode de réalisation le modèle linéaire avec saturation du débit est défini par les équations :

[Math.2]

$$\dot{P}_2 \;=\; K_s \Big( sat_1 \big( D_{col} \big) - D_s \Big)$$

avec :

[Math.3]

$$sat_1\left(D_{col}\right) = \begin{cases} D_{max} & si \quad D_{col} > D_{max}, \\ D_{col} & si \quad D_{min} \leq D_{col} \leq D_{max} \\ D_{min} & si \quad D_{col} < D_{min}. \end{cases}$$

Selon un mode de réalisation, la deuxième loi de commande est une loi de type proportionnelle intégrale saturée, et dans lequel le modèle de la seconde pression est un modèle linéaire avec saturation du débit.

Selon un mode de réalisation, la deuxième loi de commande, de type proportionnelle intégrale saturée, selon le modèle linéaire détermine la position de consigne selon l'équation :

[Math.4]

$$y_r = \frac{1}{c}\left(sat_1\left(\left(K_p(P_{ref} - P_2) + K_i\int_0^t (P_{ref} - P_2(\theta))d\theta\right) - d\right)\right)$$

Selon un mode de réalisation, la deuxième loi de commande est une loi de type proportionnelle intégrale saturée, et dans lequel le modèle de la seconde pression est un modèle non linéaire avec saturation du débit.

Selon un mode de réalisation, la deuxième loi de commande, de type proportionnelle intégrale saturée selon le modèle non linéaire de la seconde pression, détermine la position de consigne selon l'équation:

[Math.5]

$$y_r = -\sqrt{d_1 sat_1\left(K_p(P_{ref} - P_2) + K_i\int_0^t (P_{ref} - P_2(\theta))d\theta\right) + d_2} + c_2.$$

Selon un mode de réalisation, l'actionneur est un actionneur électromagnétique à réluctance variable comprenant une armature ferromagnétique fixe, un bobinage d'aimantation solidaire de cette armature et un équipage mobile en translations alternatives, solidaire de l'organe obturateur, l'actionneur étant agencé pour qu'un déplacement de l'équipage mobile entraine un déplacement axial de l'organe obturateur par rapport à l'orifice de passage du fluide, la première loi de commande étant déterminée pour faire converger la position vers la position de consigne en appliquant une tension aux bornes du bobinage pour produire une force magnétique désirée s'appliquant à l'équipage mobile de manière à entraîner le déplacement axial de l'organe obturateur vers la position de consigne.

Selon un mode de réalisation, la première loi de commande est basée sur un premier modèle non saturé de calcul de la force magnétique désirée, le premier modèle non saturé ne prenant pas en compte une saturation magnétique de l'armature ferromagnétique.

Selon un mode de réalisation, la première loi de commande est basée sur un deuxième modèle non saturé de calcul de la force magnétique désirée, le deuxième modèle non saturé prenant en compte un épanouissement des lignes de champ dans un espace compris entre l'armature ferromagnétique et l'équipage mobile.

Selon un mode de réalisation, la première loi de commande est basée sur un modèle saturé de calcul de la force magnétique, le modèle saturé prenant en compte la saturation magnétique de l'armature ferromagnétique, et un épanouissement des lignes de champ dans un espace compris entre l'armature ferromagnétique et l'équipage mobile.

Selon un mode de réalisation, le modèle saturé de calcul de la force magnétique désirée comprend une première partie du modèle applicable lorsque qu'un courant qui circule dans le bobinage d'aimantation est inférieur à un courant de saturation, et une deuxième partie du modèle applicable lorsque le courant est supérieur au courant de saturation, la deuxième partie du modèle étant identifiée à partir de mesures de la force magnétique désirée réalisées, pour différentes valeurs du courant supérieures au courant de saturation, au cours d'une phase d'identification de la deuxième partie du modèle.

Selon un mode de réalisation, la première loi de commande comprend en outre un effet intégral pour une limiter un bruit dû à une reconstruction d'une vitesse de l'organe obturateur estimée à partir de la position mesurée de l'organe obturateur.

Selon un mode de réalisation, la première loi de commande comprend en outre un effet intégral pour compenser une erreur de modélisation.

Selon un mode de réalisation, le détendeur comporte en outre un dispositif élastique adapté pour rappeler l'organe obturateur dans une position telle que l'équipage mobile est distant de l'armature ferromagnétique fixe.

Selon un mode de réalisation, le détendeur comporte un dispositif de compensation au moins partielle des efforts exercés par la pression du fluide sur l'organe obturateur.

Pour sa bonne compréhension, un mode de réalisation et/ou de mise en oeuvre de l'invention est décrit en référence aux dessins ci-annexés représentant, à titre d'exemple non limitatif, une forme de réalisation ou de mise en œuvre respectivement d'un dispositif et/ou d'un procédé selon l'invention. Les mêmes références sur les dessins désignent des éléments similaires ou des éléments dont les fonctions sont similaires.

[Fig.1] est une représentation schématique d'un détendeur selon l'invention.

[Fig.2] est une représentation schématique plus détaillée d'un détendeur selon l'invention.

[Fig.3] est une représentation schématique d'un mode d'opération d'une loi de commande du détendeur selon l'invention.

[Fig.4] est une représentation schématique d'un premier mode d'opération simplifié de la loi de commande du détendeur selon l'invention, dans lequel le modèle de positionnement de l'actionneur est négligé.

[Fig.5] est une représentation schématique d'un deuxième mode d'opération simplifié de la loi de commande du détendeur selon l'invention.

[Fig.6] est une représentation schématique d'un troisième mode d'opération de la loi de commande du détendeur selon l'invention.

[Fig.7] est une représentation schématique du circuit magnétique de l'actionneur du détendeur selon l'invention.

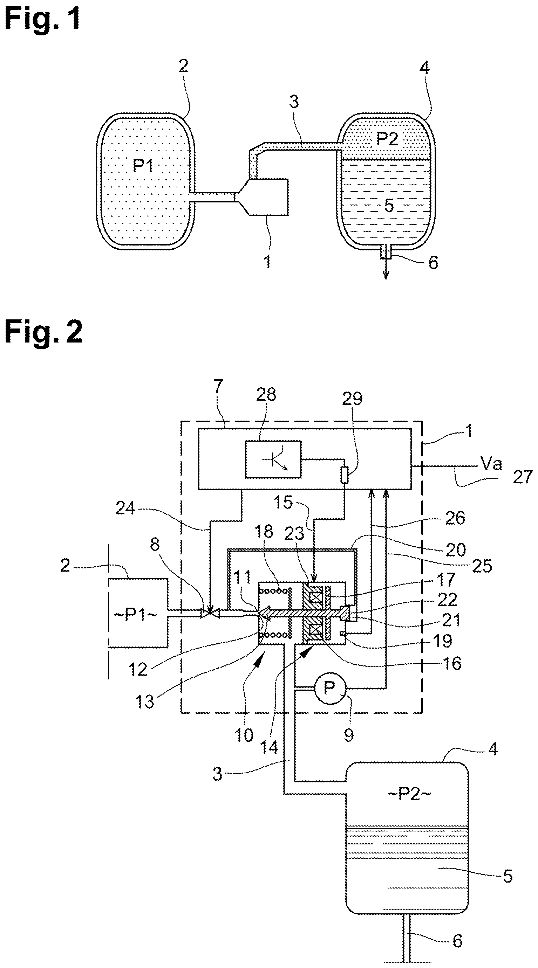

Comme cela est illustré sur la figure 1, un détendeur 1 de pression est un dispositif 1 utilisé pour détendre un fluide contenu dans un réservoir ou une source 2 à une première pression P1, typiquement très élevée, vers une sortie 3 configurée pour déboucher en aval du dispositif 1 dans un autre réservoir 4 à une pression P2 plus faible, par exemple quelques bars ou dizaines de bars, selon les utilisations. Par exemple, dans le système de propulsion d'un lanceur spatial, le fluide pourra être de l'hélium contenu dans la source 2 à une pression P1 de 400 bars, le détendeur 1 étant configuré pour détendre l'hélium de la source 2 vers la sortie 3 se déversant dans une cavité 4 d'un réservoir de combustible 5 de manière à maintenir ledit combustible 5 à une pression P2 de quelques bars, en amont d'une chambre de combustion 6.

Comme cela est illustré de manière détaillée sur la figure 2, un détendeur 1 selon un mode d'opération de l'invention comprend une vanne 10 commandée, insérée entre la source 2 de fluide à une première pression P1 et la sortie 3 de fluide à une seconde pression P2 ; le détendeur 1 comprend en outre un capteur de pression 9 adapté pour mesurer la seconde pression P2 et un calculateur 7 de commande adapté pour commander la vanne 10 de telle sorte que la vanne génère une perte de charge entre la source de fluide et la sortie permettant d'asservir la seconde pression P2 à une pression de consigne $P_{ref}$ ; la vanne 10 commandée comprend un actionneur 14 adapté pour restreindre une section de passage 11 du fluide, entre le détendeur 1 et la sortie 3 de fluide, de manière à faire varier ladite section de passage ; la restriction se faisant au moyen d'un orifice 12 de passage du fluide et d'un organe obturateur 13 placé dans l'axe de l'orifice et agencé pour qu'un déplacement axial de l'organe obturateur 13 entraine une variation de la section de passage du fluide ; l'organe obturateur 13 étant entraîné par l'actionneur (14) ; le détendeur 1 comprend également un capteur de position 19 configuré pour mesurer une position X1 de l'organe obturateur 13 le long de la direction de déplacement de l'organe obturateur 13.

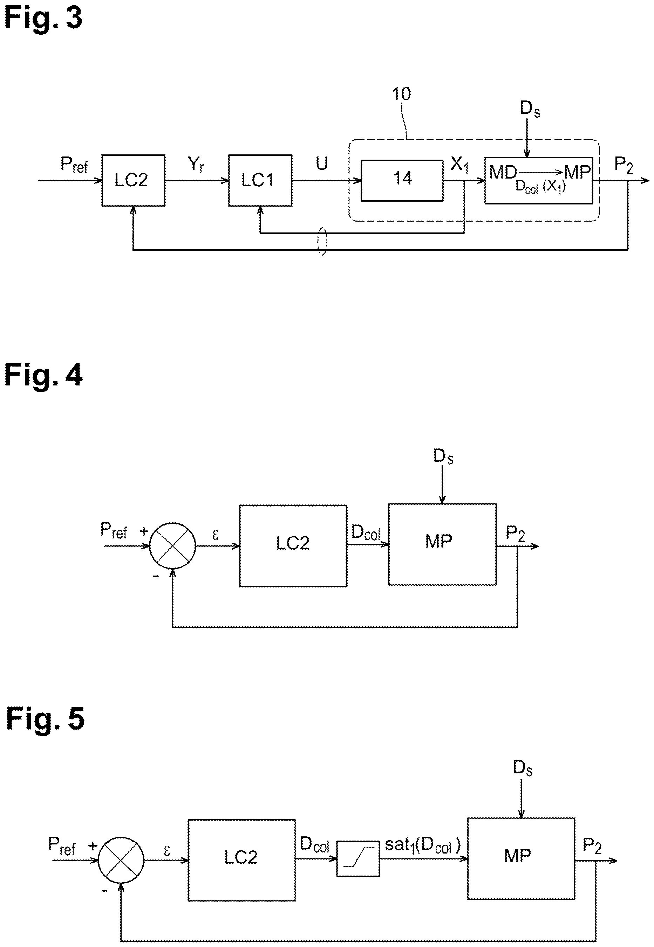

Comme cela est représenté sur la figure 3, le calculateur 7 de commande du détendeur 1 est adapté pour faire converger, selon une première loi de commande LC1, la position $X_1$ de l'organe obturateur 13 vers une position de consigne $Y_r$, la position de consigne $Y_r$ étant déterminée par une deuxième loi de commande LC2 pour faire converger la seconde pression P2 vers la pression de consigne $P_{ref}$, sur la base d'un modèle MD d'un débit $D_{col}$ du détendeur 1, le débit $D_{col}$ du détendeur 1 étant le débit du fluide s'écoulant à travers la section de passage entre le détendeur 1 et la sortie 3 de fluide; ledit modèle MD du débit $D_{col}$ du détendeur 1 est défini en fonction de la position $X_1$ de l'organe obturateur 13 ; en outre, ladite deuxième loi de commande LC2 est déterminée sur la base d'un modèle MP de la seconde pression P2, ledit modèle MP de la seconde pression P2 étant fonction du débit $D_{col}$ du détendeur 1 et d'un débit de consommation $D_s$ en aval de la sortie 3 de fluide ; le débit de consommation $D_s$ en aval de la sortie 3 de fluide est, par exemple, déterminé par la consommation de combustible 5 dans la chambre de combustion en aval du réservoir 4.

Selon un exemple de réalisation, l'actionneur (14) est un actionneur électromagnétique à réluctance variable comprenant une armature (15) ferromagnétique fixe, un bobinage (16) d'aimantation solidaire de cette armature et un équipage mobile (17) en translations alternatives, solidaire de l'organe obturateur (13), l'actionneur étant agencé pour qu'un déplacement de l'équipage mobile entraine un déplacement axial de l'organe obturateur par rapport à l'orifice (12) de passage du fluide, la première loi de commande (LC1) étant déterminée pour faire converger la position ($X_1$) vers la

position de consigne ($Y_r$) en appliquant une tension (U) aux bornes du bobinage (16) pour produire une force magnétique désirée ($F_d$) s'appliquant à l'équipage mobile de manière à entraîner le déplacement axial de l'organe obturateur (13) vers la position de consigne ($Y_r$).

En particulier, lorsque la dynamique de l'organe obturateur n'est pas prise en compte, autrement dit la position $X_1$ de l'organe obturateur 13 est égale à la position de consigne $Y_r$, comme cela est illustré sur la figure 4, le modèle MP de la seconde pression P2 est par exemple un modèle linéaire, sans saturation du débit.

Plus particulièrement, le modèle linéaire sans saturation du débit est défini par l'équation :

[Math.1]

$$\dot{P}_2 = K_s \left( D_{col} - D_s \right)$$

dans laquelle $\dot{P}_2$ est la dérivée temporelle de la seconde pression P2, et dans laquelle $K_s$ est une constante.

Par exemple, sous certaines hypothèses d'écoulement d'un fluide gazeux, en régime de compression et de détente adiabatique, avec une température constante $T_2$ du fluide dans la cavité 5 du réservoir 4, on peut établir que :

[Math. 6]

$$K_s = \frac{rT_2}{V_2}$$

où $V_2$ est le volume du fluide dans la cavité 5 du réservoir 4, et r est la constante de gaz parfait divisée par la masse molaire du fluide gazeux.

Selon un autre exemple de réalisation, illustré sur la figure 5, la dynamique de l'organe obturateur 13 n'étant toujours pas prise en compte, autrement dit la position $X_1$ de l'organe obturateur 13 étant toujours supposée égale à la position de consigne $Y_r$, le modèle MP de la seconde pression P2 est par exemple un modèle linéaire, avec saturation du débit.

Plus particulièrement, le modèle linéaire avec saturation du débit est défini par les équations :

[Math. 2]

$$\dot{P}_2 = K_s \left( sat_1 \left( D_{col} \right) - D_s \right)$$

et:

[Math. 3]

$$sat_1 \left( D_{col} \right) = \begin{cases} D_{max} & si & D_{col} > D_{max}, \\ D_{col} & si & D_{min} \leq D_{col} \leq D_{max} \\ D_{min} & si & D_{col} < D_{min}. \end{cases}$$

Selon ce modèle, le débit $D_{col}$ du détendeur 1 est borné à l'intérieur d'un intervalle compris entre $D_{min}$ et $D_{max}$.

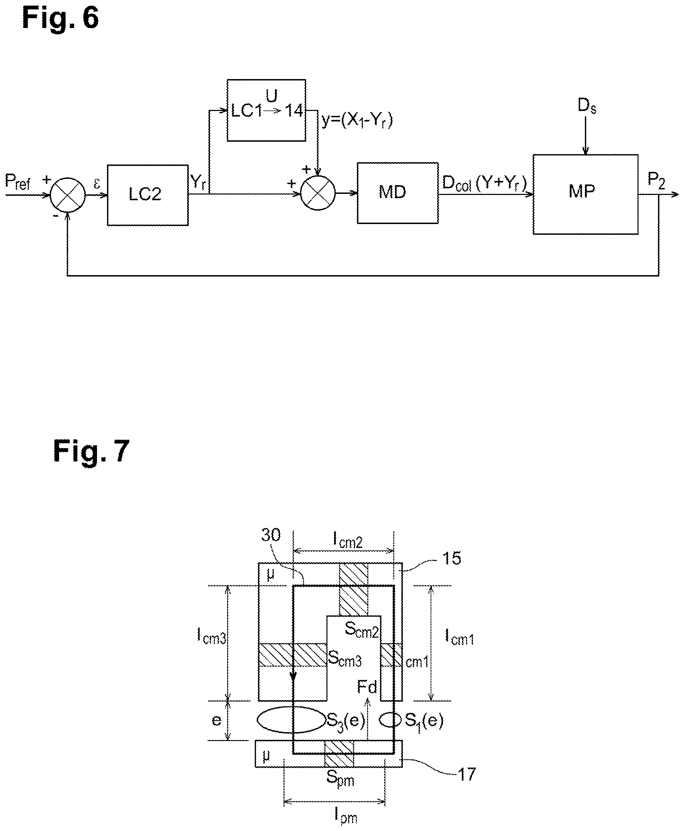

Selon un autre exemple de réalisation, illustré à la figure 6, la deuxième loi de commande LC2 est une loi de type proportionnelle intégrale saturée, et le modèle MP de la seconde pression P2 est un modèle linéaire avec saturation du débit.

Plus particulièrement, la deuxième loi de commande LC2, de type proportionnelle intégrale saturée, détermine la position de consigne $Y_r$ selon l'équation :

[Math.4]

$$y_r = \frac{1}{c}\left(sat_1\left((K_p(P_{ref} - P_2) + K_i\int_0^t (P_{ref} - P_2(\theta))d\theta\right) - d\right)$$

dans laquelle $K_p$ et $K_i$ sont des gains constants, et dans laquelle d est un paramètre d'un modèle MD du débit $D_{col}$ du détendeur 1 ; selon un exemple dudit modèle MD du débit $D_{col}$ du détendeur 1, ledit débit $D_{col}$ du détendeur 1 est une fonction linéaire de la position $X_1$ de l'organe obturateur 13, définie par l'équation :

[Math. 7]

$$D_{col}(X_1) = c\ X_1 + d$$

où c est un autre paramètre de cette fonction linéaire.

Avantageusement, on choisira pour le paramètre c, une valeur égale au produit d'un premier coefficient $c_s$, et d'une masse volumique et d'une vitesse du fluide au col du détendeur, i.e. là où la section de passage du détendeur est la plus faible pour la position déterminée $X_1$ de l'organe obturateur 13; on choisira en outre pour le paramètre d, une valeur égale au produit d'un deuxième coefficient $d_s$ et de la masse volumique et de la vitesse du fluide au col du détendeur; le premier coefficient $c_s$ et le deuxième coefficient $d_s$ sont les deux paramètres d'une fonction linéaire affine qui représente la section de passage $S_{col}$ du détendeur 1 en fonction d'une distance e, ou entrefer, séparant l'armature ferromagnétique 15 et l'équipage mobile 17 en translations alternatives, solidaire de l'organe obturateur 13, de sorte que :

[Math. 8]

$$S_{col}(e) = c_s\ e + d_s$$

Selon un autre exemple de réalisation, la deuxième loi de commande LC2 est une loi de type proportionnelle intégrale saturée, et le modèle MP de la seconde pression P2 est un modèle non linéaire avec saturation du débit.

Plus particulièrement, la deuxième loi de commande LC2, de type proportionnelle intégrale saturée, détermine la position de consigne $Y_r$ selon l'équation :

[Math.5]

$$y_r = -\sqrt{d_1 sat_1\left(K_p(P_{ref} - P_2) + K_i\int_0^t (P_{ref} - P_2(\theta))d\theta\right) + d_2} + c_2.$$

dans laquelle $K_p$ et $K_i$ sont les gains constants, et dans laquelle $d_2$ et $c_2$ sont en particulier déterminés par les équations ci-dessous :

[Math. 9]

$$c_1 = d - b^2$$

[Math. 10]

$$c_2 = -c/2b$$

[Math. 11]

$$d_2 = -c_1/b$$

[Math. 12]

$$d_1 = 1/b\rho_{col}C_{col}$$

avec $\rho_{col}$ = une masse volumique du fluide au col du détendeur, i.e. là où la section de passage du détendeur est la plus faible pour la position déterminée $X_1$ de l'organe obturateur 13 ,

et $C_{col}$ = une vitesse du fluide au col du détendeur,

et où les paramètres b, c, et d sont les coefficients d'un modèle du second degré MD du débit $D_{col}$ du détendeur 1 ; en fonction de la position $X_1$ de l'organe obturateur 13, ledit modèle étant défini par l'équation :

[Math. 13]

$$D_{col}(X_1)=b\ (X_1)^2+c\ X_1+d$$

Avantageusement, on choisira pour le paramètre c, une valeur égale au produit d'un premier coefficient $c_s$, et de la masse volumique $\rho_{col}$ et de la vitesse $C_{col}$ du fluide au col du détendeur; encore plus avantageusement, on choisira en outre pour le paramètre d, une valeur égale au produit d'un deuxième coefficient $d_s$ et de la masse volumique $\rho_{col}$ et de la vitesse $C_{col}$ du fluide au col du détendeur; encore plus avantageusement, on choisira pour le paramètre b, une valeur égale au produit d'un troisième coefficient $b_s$, et de la masse volumique $\rho_{col}$ et de la vitesse $C_{col}$ du fluide au col du détendeur; le premier coefficient $c_s$, le deuxième coefficient $d_s$, le troisième coefficient $b_s$, étant les coefficients d'une fonction du second degré, qui représente la section de passage $S_{col}$ du détendeur 1 en fonction de l'entrefer e, séparant l'armature ferromagnétique 15 et l'équipage mobile 17 en translations alternatives, solidaire de l'organe obturateur 13, de sorte que :

[Math. 14]

$$S_{col}(e)=\ b_s\ e^2+c_s\ e+d_s$$

L'entrefer e est déterminé, à une constante près, par la position $X_1$ de l'organe obturateur 13.

La première loi de commande LC1 est déterminée pour faire converger la position X, vers la position de consigne $Y_r$ en appliquant une tension U aux bornes du bobinage 16 pour produire une force magnétique désirée $F_d$ s'appliquant à l'équipage mobile de manière à entraîner le déplacement axial de l'organe obturateur 13 vers la position de consigne $Y_r$.

La force magnétique est une fonction d'un courant i qui circule dans le bobinage 16 d'aimantation, solidaire de l'armature ferromagnétique 15, et dépend d'une inductance L d'un circuit magnétique formé par le bobinage 16, de l'armature ferromagnétique 15 et l'équipage mobile 17. Cette inductance L dépend de l'entrefer e qui sépare l'armature ferromagnétique 15 et l'équipage mobile 17. Selon une formule connue de l'homme du métier la force magnétique $F_{mag}$ créée par le circuit magnétique sur l'équipage mobile 17 peut s'écrire :

[Math. 15]

$$F_{mag}=\frac{1}{2}i^2\frac{\partial L(e)}{\partial e}$$

Un modèle de la force magnétique désirée est donc déterminé par un modèle correspondant de l'inductance du circuit magnétique formé par le bobinage 16 de l'armature ferromagnétique 15 et l'équipage mobile 17.

En particulier, selon un premier exemple, la première loi de commande LC1 est basée sur un premier modèle non saturé de calcul de la force magnétique désirée $F_d$, ledit premier modèle non saturé ne prenant pas en compte une saturation magnétique de l'armature ferromagnétique 15.

Pour être représentatif de la complexité des phénomènes magnétiques à prendre en compte, ce modèle non saturé, plus particulièrement selon un deuxième exemple, peut prendre en compte un épanouissement des lignes de champ dans un espace compris entre l'armature ferromagnétique 15 et l'équipage mobile 17.

Sur la figure 7 représentant un exemple de réalisation d'un circuit magnétique formé par le bobinage 16 de l'armature ferromagnétique 15 et l'équipage mobile 17, une ligne de champ moyenne 30 du champ magnétique créée dans le circuit magnétique par la circulation du courant dans le bobinage 16 non représenté sur la figure. Les sections $S_1$ et $S_3$ représentées sur la figure 7, sont les sections d'un tube de flux magnétique dans l'air, dans l'espace de l'entrefer qui sépare l'armature ferromagnétique 15 et l'équipage mobile 17. Lesdites sections $S_1$ et $S_3$ dépendent de l'entrefer pour tenir compte d'un effet d'épanouissement des lignes de champ.

Sous l'hypothèse d'une absence d'inductance de fuite, un exemple de modèle non saturé ne prenant pas en compte une saturation magnétique de l'armature ferromagnétique 15, mais prenant en compte un effet d'épanouissement des lignes de champ sera basé sur une inductance L modélisée selon la formule :

[Math. 16]

$$L = \frac{N^2}{\left(\frac{1}{\mu_0 S_1(e)} + \frac{1}{\mu_0 S_3(e)}\right)e}$$

Dans laquelle N est un nombre de spire du bobinage 16.

Encore plus particulièrement, selon un troisième exemple, la première loi de commande est basée sur un modèle saturé de calcul de la force magnétique, le modèle saturé prend en compte la saturation magnétique de l'armature ferromagnétique 15, et un épanouissement des lignes de champ dans un espace compris entre l'armature ferromagnétique 15 et l'équipage mobile 17. Dans ce cas, l'expression de la force magnétique utilise un modèle de connaissance issu de la théorie si le courant électrique est inférieur au courant de saturation et un modèle de comportement si le courant est supérieur au courant de saturation, modélisé selon la formule :

[Math. 17]

$$F_{mag}(e,i) \begin{cases} F\frac{}{} & \text{si } i \leq i_s(e), \\ F\frac{}{} & \text{si } i > i_s(e), \end{cases}$$

dans laquelle $i_s$ représente un courant de saturation, dépendant de l'entrefer e, i.e. de l'espace compris entre l'armature ferromagnétique 15 et l'équipage mobile 17.

Un exemple de modèle saturé prenant en compte une saturation magnétique de l'armature ferromagnétique 15, et un effet d'épanouissement des lignes de champ sera basé sur une inductance L modélisée selon la formule :

[Math. 18]

$$L = \frac{N^2}{\frac{e}{\mu_0 S_3(e)} + \frac{l_{CM_3}}{\mu_0 \mu_r S_{CM_3}} + \frac{e}{\mu_0 S_1(e)} + \frac{l_{PM}}{\mu_0 \mu_r S_{PM}} + \frac{l_{CM_1}}{\mu_0 \mu_r S_{CM_1}} + \frac{l_{CM_2}}{\mu_0 \mu_r S_{CM_2}}}$$

Dans laquelle :

- $\mu_0$= perméabilité magnétique du vide ;
- $\mu_r$= perméabilité magnétique relative du matériau de l'armature ferromagnétique et de l'équipage mobile ;
- $l_{PM}$= épaisseur de la partie mobile en mm ;
- $S_{PM}$=Section de la partie mobile en mm$^2$ ;
- $l_{CM1}$= épaisseur de la partie fixe 1 en mm ;
- $S_{CM1}$=Section de la partie fixe 1 en mm$^2$;
- $l_{CM2}$= épaisseur de la partie fixe 2 en mm ;
- $S_{CM2}$=Section de la partie fixe 2 en mm$^2$;
- $l_{CM3}$= épaisseur de la partie fixe 3 en mm ;
- $S_{CM3}$=Section de la partie fixe 3 en mm$^2$;

Pour être encore plus représentatif de la réalité, le modèle saturé de calcul de la force magnétique désirée ($F_d$) comprend une première partie du modèle applicable lorsque que le courant i qui circule dans le bobinage 16 d'aimantation est inférieur au courant de saturation $i_s$, et une deuxième partie du modèle applicable lorsque le courant i est supérieur au courant de saturation $i_s$.

Selon la première partie du modèle saturé, la force magnétique désirée ($F_d$) est décrite, de préférence, par l'expression :

$$\text{[Math. 19]}$$
$$Fd = \frac{1}{2}i^2 \frac{\partial L(e)}{\partial e}$$

Selon la deuxième partie du modèle saturé, la force magnétique désirée $F_d$ est décrite, de préférence, par une expression identifiée sur la base de mesures réalisées au cours d'une phase d'identification, pour des valeurs du courant i supérieures au courant de saturation $i_s$. Plus particulièrement, l'expression identifiée sur la base des mesures consiste en une interpolation entre des valeurs mesurées la force magnétique désirée $F_d$, enregistrées dans une table de valeurs mesurées correspondant à différentes valeurs du courant i, ou bien l'expression identifiée est une formule paramétrique dont les paramètres sont déterminés à partir des valeurs mesurées la force magnétique désirée $F_d$.

Plus particulièrement encore, le courant de saturation $i_s$ est déterminé fonction de l'entrefer e selon une autre formule paramétrique identifiée sur la base de mesures.

Toutes les lois de commandes décrites ci-avant utilisent une valeur de la vitesse de l'équipage mobile 17, c'est-à-dire de l'organe obturateur 13. En l'absence de capteur de vitesse, une valeur de la vitesse est estimée par une méthode numérique à partir du signal de capteur de position. Cela introduit un bruit de reconstruction de la vitesse de l'organe obturateur. Pour limiter ledit bruit de reconstruction la première loi de commande comprend en outre une limitation du bruit par l'ajout d'un effet intégral à la première loi de commande.

Selon un exemple de réalisation, le détendeur selon l'invention comporte en outre un dispositif élastique 18 adapté pour rappeler l'organe obturateur 13 dans une position telle que l'équipage mobile 17 est distant de l'armature 15 ferromagnétique fixe.

Selon un exemple de réalisation, le détendeur selon l'invention comporte un dispositif de compensation 20, 21, 22 au moins partielle des efforts exercés par la pression du fluide sur l'organe obturateur 13.

## Revendications

1. Détendeur (1) à commande électronique, du type comportant une vanne (10) commandée insérée entre une source (2) de fluide à une première pression (P1) et une sortie (3) de fluide à une seconde pression (P2), la seconde pression étant inférieure à la première pression, un capteur de pression (9) adapté pour mesurer la seconde pression et un calculateur (7) de commande adapté pour commander la vanne (10) de telle sorte que la vanne génère une perte de charge entre la source de fluide et la sortie permettant d'asservir la seconde pression (P2) à une pression de consigne ($P_{ref}$) ;

   - la vanne (10) commandée comprenant un actionneur (14) adapté pour restreindre une section de passage du fluide (11), entre la source (2) et la sortie (3) de fluide, de manière à faire varier ladite section de passage,
   - la restriction se faisant au moyen d'un orifice (12) de passage du fluide et d'un organe obturateur (13) placé dans l'axe de l'orifice et agencé pour qu'un déplacement axial de l'organe obturateur (13) entraine une variation de la section de passage du fluide,
   - l'organe obturateur (31) étant entraîné par l'actionneur (14),
   - le détendeur (1) comportant un capteur de position (19) de l'organe obturateur (13),

   **caractérisé en ce que** le calculateur (7) de commande est adapté pour faire converger, selon une première loi de commande (LC1), la position ($X_1$) de l'organe obturateur (13) vers une position de consigne ($Y_r$), la position de consigne ($Y_r$) étant déterminée par une deuxième loi de commande (LC2) pour faire converger la seconde pression (P2) vers la pression de consigne ($P_{ref}$), sur la base d'un modèle (MD) d'un débit ($D_{col}$) du détendeur (1), le débit du détendeur ($D_{col}$) étant le débit du fluide s'écoulant à travers la section de passage entre le détendeur (1) et la sortie (3) de fluide, ledit modèle (MD) du débit du détendeur ($D_{col}$) étant défini en fonction de la position ($X_1$) de l'organe obturateur (13), ladite deuxième loi de commande (LC2) étant déterminée en outre sur la base d'un modèle (MP) de la seconde pression (P2) fonction du débit du détendeur ($D_{col}$) et d'un débit de consommation ($D_s$) en aval de la sortie (3) de fluide.

2. Détendeur (1) selon la revendication 1, dans lequel la dynamique de l'organe obturateur n'est pas prise en compte, autrement dit dans lequel la première loi de commande (LC1) est telle que la position ($X_1$) de l'organe obturateur (13) est égale à la position de consigne ($Y_r$), et dans lequel le modèle (MP) de la seconde pression (P2) est un modèle linéaire, sans saturation du débit.

3. Détendeur (1) selon la revendication 1, dans lequel la dynamique de l'organe obturateur n'est pas prise en compte, autrement dit dans lequel la première loi de commande (LC1) est telle que la position $(X_1)$ de l'organe obturateur (13) est égale à la position de consigne $(Y_r)$, et dans lequel le modèle (MP) de la seconde pression (P2) est un modèle linéaire, avec saturation du débit.

4. Détendeur (1) selon la revendication 1, dans lequel la deuxième loi de commande est une loi de type proportionnelle intégrale saturée, et dans lequel le modèle (MP) de la seconde pression (P2) est un modèle linéaire avec saturation du débit.

5. Détendeur (1) selon la revendication 1, dans lequel la deuxième loi de commande est une loi de type proportionnelle intégrale saturée, et dans lequel le modèle (MP) de la seconde pression (P2) est un modèle non linéaire avec saturation du débit.

6. Détendeur (1) selon l'une des revendications 1 à 4, dans lequel l'actionneur (14) est un actionneur électromagnétique à réluctance variable comprenant une armature (15) ferromagnétique fixe, un bobinage (16) d'aimantation solidaire de cette armature et un équipage mobile (17) en translations alternatives, solidaire de l'organe obturateur (13), l'actionneur étant agencé pour qu'un déplacement de l'équipage mobile entraine un déplacement axial de l'organe obturateur par rapport à l'orifice (12) de passage du fluide, la première loi de commande (LC1) étant déterminée pour faire converger la position $(X_1)$ vers la position de consigne $(Y_r)$ en appliquant une tension (U) aux bornes du bobinage (16) pour produire une force magnétique désirée $(F_d)$ s'appliquant à l'équipage mobile de manière à entraîner le déplacement axial de l'organe obturateur (13) vers la position de consigne $(Y_r)$.

7. Détendeur (1) selon la revendication 4, dans lequel la première loi de commande (LC1) est basée sur un premier modèle non saturé de calcul de la force magnétique désirée $(F_d)$, le premier modèle non saturé ne prenant pas en compte une saturation magnétique de l'armature ferromagnétique (15).

8. Détendeur (1) selon la revendication 4, dans lequel la première loi de commande est basée sur un deuxième modèle non saturé de calcul de la force magnétique désirée $(F_d)$, le deuxième modèle non saturé prenant en compte un épanouissement des lignes de champ dans un espace compris entre l'armature ferromagnétique (15) et l'équipage mobile (17).

9. Détendeur (1) selon la revendication 4, dans lequel la première loi de commande est basée sur un modèle saturé de calcul de la force magnétique désirée $(F_d)$, le modèle saturé prenant en compte la saturation magnétique de l'armature ferromagnétique (15), et un épanouissement des lignes de champ dans un espace compris entre l'armature ferromagnétique (15) et l'équipage mobile (17).

10. Détendeur (1) selon la revendication 9, dans lequel le modèle saturé de calcul de la force magnétique désirée (Fd) comprend une première partie du modèle applicable lorsque qu'un courant qui circule dans le bobinage 16 d'aimantation est inférieur à un courant de saturation, et une deuxième partie du modèle applicable lorsque le courant est supérieur au courant de saturation, la deuxième partie du modèle étant identifiée à partir de mesures de la force magnétique désirée (Fd) réalisées, pour différentes valeurs du courant supérieures au courant de saturation, au cours d'une phase d'identification de la deuxième partie du modèle.

11. Détendeur (1) selon l'une des revendications 1 à 9, dans lequel la première loi de commande comprend en outre un effet intégral pour une limiter un bruit dû à une reconstruction d'une vitesse de l'organe obturateur estimée à partir de la position mesurée de l'organe obturateur (13).

12. Détendeur (1) selon l'une des revendications 1 à 10, dans lequel la première loi de commande comprend en outre un effet intégral pour compenser une erreur de modélisation.

13. Détendeur selon l'une des revendications 6 à 11, **caractérisé en ce qu'**il comporte en outre un dispositif élastique (18) adapté pour rappeler l'organe obturateur (13) dans une position telle que l'équipage mobile (17) est distant de l'armature (15) ferromagnétique fixe.

14. Détendeur selon l'une des revendications 1 à 12, **caractérisé en ce qu'**il comporte un dispositif de compensation (20, 21, 22) au moins partielle des efforts exercés par la pression du fluide sur l'organe obturateur (13).

**Patentansprüche**

1. Elektronisch gesteuerter Druckminderer (1) vom Typ, der ein gesteuertes Ventil (10), das zwischen eine Fluidquelle (2) mit einem ersten Druck (P1) und einen Fluidausgang (3) mit einem zweiten Druck (P2) eingesetzt ist, wobei der zweite Druck niedriger als der erste Druck ist, einen Drucksensor (9), der dazu ausgelegt ist, den zweiten Druck zu messen, und ein Steuerungsrechner (7) umfasst, der dazu ausgelegt ist, das Ventil (10) so zu steuern, dass das Ventil einen Druckverlust zwischen der Fluidquelle und dem Ausgang erzeugt, der es ermöglicht, den zweiten Druck (P2) auf einen Solldruck ($P_{ref}$) zu regeln;

   - wobei das gesteuerte Ventil (10) ein Stellglied (14) umfasst, das dazu ausgelegt ist, einen Durchflussquerschnitt des Fluids (11) zwischen der Quelle (2) und dem Fluidausgang (3) einzuschränken, so dass der Durchflussquerschnitt verändert wird,
   - wobei die Beschränkung mittels einer Fluiddurchgangsöffnung (12) und eines Verschlusselements (13) erfolgt, das in der Achse der Öffnung platziert und so angeordnet ist, dass eine axiale Verschiebung des Verschlusselements (13) eine Änderung des Durchflussquerschnitts des Fluids bewirkt,
   - wobei das Verschlusselement (31) vom Stellglied (14) angetrieben wird,
   - wobei der Druckminderer (1) einen Positionssensor (19) des Verschlusselements (13) umfasst,

   **dadurch gekennzeichnet, dass** der Steuerungsrechner (7) dazu ausgelegt ist, gemäß einem ersten Steuerungsgesetz (LC1) die Position ($X_1$) des Verschlusselements (13) in eine Sollwertposition ($Y_r$) konvergieren zu lassen, wobei die Sollwertposition ($Y_r$) durch ein zweites Steuerungsgesetz (LC2) bestimmt wird, um den zweiten Druck (P2) auf den Sollwertdruck ($P_{ref}$) basierend auf einem Modell (MD) eines Durchflusses ($D_{col}$) des Druckminderers (1) konvergieren zu lassen, wobei der Durchfluss des Druckminderers ($D_{col}$) der Durchfluss des Fluids ist, das durch den Durchflussquerschnitt zwischen dem Druckminderer (1) und dem Fluidausgang (3) fließt, wobei das Modell (MD) des Durchflusses des Druckminderers ($D_{col}$) in Abhängigkeit von der Position ($X_1$) des Verschlusselements (13) definiert ist, wobei das zweite Steuerungsgesetz (LC2) ferner basierend auf einem Modell (MP) des zweiten Drucks (P2) in Abhängigkeit von dem Durchfluss des Druckminderers ($D_{col}$) und einem Verbrauchsdurchfluss ($D_s$) nach dem Fluidausgang (3) bestimmt wird.

2. Druckminderer (1) nach Anspruch 1, wobei die Dynamik des Verschlusselements nicht berücksichtigt wird, mit anderen Worten, wobei das erste Steuerugnsgesetz (LC1) so ist, dass die Position ($X_1$) des Verschlusselements (13) der Sollwertposition ($Y_r$) entspricht, und wobei das Modell (MP) des zweiten Drucks (P2) ein lineares Modell ohne Sättigung des Durchflusses ist.

3. Druckminderer (1) nach Anspruch 1, wobei die Dynamik des Verschlusselements nicht berücksichtigt wird, mit anderen Worten, wobei das erste Steuerungsgesetz (LC1) so ist, dass die Position ($X_1$) des Verschlusselements (13) gleich der Sollwertposition ($Y_r$) ist, und wobei das Modell (MP) des zweiten Drucks (P2) ein lineares Modell mit Sättigung des Durchflusses ist.

4. Druckminderer (1) nach Anspruch 1, wobei das zweite Steuerungsgesetz ein gesättigtes integrales Proportionalgesetz ist, und wobei das Modell (MP) des zweiten Drucks (P2) ein lineares Modell mit Sättigung des Durchflusses ist.

5. Druckminderer (1) nach Anspruch 1, wobei das zweite Steuerungsgesetz ein gesättigtes integrales Proportionalgesetz ist, und wobei das Modell (MP) des zweiten Drucks (P2) ein nichtlineares Modell mit Sättigung des Durchflusses ist.

6. Druckminderer (1) nach einem der Ansprüche 1 bis 4, wobei das Stellglied (14) ein elektromagnetisches Stellglied mit variabler Reluktanz ist, das einen festen ferromagnetischen Anker (15), eine mit diesem Anker verbundene Magnetisierungsspule (16) und ein mit dem Verschlusselement (13) verbundenes Bauelement (17), das in hin- und hergehenden Verschiebungen beweglich ist, umfasst, wobei das Stellglied so angeordnet ist, dass eine Bewegung des beweglichen Bauelements eine axiale Bewegung des Verschlusselements in Bezug auf die Fluiddurchgangsöffnung (12) bewirkt, wobei das erste Steuerungsgesetz (LC1) bestimmt ist, um die Position ($X_1$) in Richtung der Sollwertposition ($Y_r$) konvergieren zu lassen, indem eine Spannung (U) an den Klemmen der Spule (16) angelegt wird, um eine gewünschte Magnetkraft ($F_d$) zu erzeugen, die auf das bewegliche Bauelement wirkt, um die axiale Bewegung des Verschlusselements (13) in Richtung der Sollwertposition ($Y_r$) zu bewirken.

7. Druckminderer (1) nach Anspruch 4, wobei das erste Steuerungsgesetz (LC1) auf einem ersten ungesättigten Modell zur Berechnung der gewünschten Magnetkraft ($F_d$) basiert, wobei das erste ungesättigte Modell eine magnetische Sättigung des ferromagnetischen Ankers (15) nicht berücksichtigt.

8. Druckminderer (1) nach Anspruch 4, wobei das erste Steuerungsgesetz auf einem zweiten ungesättigten Modell zur Berechnung der gewünschten Magnetkraft ($F_d$) basiert, wobei das zweite ungesättigte Modell eine Entfaltung der Feldlinien in einem Raum zwischen dem ferromagnetischen Anker (15) und dem beweglichen Bauelement (17) berücksichtigt.

9. Druckminderer (1) nach Anspruch 4, wobei das erste Steuerungsgesetz auf einem gesättigten Modell zur Berechnung der gewünschten Magnetkraft ($F_d$) basiert, wobei das gesättigte Modell die magnetische Sättigung des ferromagnetischen Ankers (15) und eine Entfaltung der Feldlinien in einem Raum zwischen dem ferromagnetischen Anker (15) und dem mobilen Bauelement (17) berücksichtigt.

10. Druckminderer (1) nach Anspruch 9, wobei das gesättigte Modell zur Berechnung der gewünschten Magnetkraft (Fd) einen ersten Teil des anwendbaren Modells umfasst, wenn ein Strom, der in der Magnetisierungsspule 16 fließt, kleiner als ein Sättigungsstrom ist, und einen zweiten Teil des anwendbaren Modells, wenn der Strom größer als der Sättigungsstrom ist, wobei der zweite Teil des Modells anhand der Messungen der gewünschten Magnetkraft (Fd) identifiziert wird, die für verschiedene Stromwerte, die größer als der Sättigungsstrom sind, während einer Phase der Identifizierung des zweiten Teils des Modells durchgeführt werden.

11. Druckminderer (1) nach einem der Ansprüche 1 bis 9, wobei das erste Steuerungsgesetz ferner eine integrale Wirkung umfasst, um ein Rauschen aufgrund einer Rekonstruktion einer aus der gemessenen Position des Verschlusselements (13) geschätzten Geschwindigkeit des Verschlusselements zu begrenzen.

12. Druckminderer (1) nach einem der Ansprüche 1 bis 10, wobei das erste Steuerungsgesetz ferner eine integrale Wirkung umfasst, um einen Modellierungsfehler auszugleichen.

13. Druckminderer nach einem der Ansprüche 6 bis 11, **dadurch gekennzeichnet, dass** er ferner eine elastische Vorrichtung (18) umfasst, die dazu ausgelegt ist, das Verschlusselement (13) so in eine Position zurückzuziehen, dass das bewegliche Bauelement (17) vom festen ferromagnetischen Anker (15) entfernt ist.

14. Druckminderer nach einem der Ansprüche 1 bis 12, **dadurch gekennzeichnet, dass** er eine Vorrichtung (20, 21, 22) zumindest teilweise zum Ausgleichen der durch den Druck des Fluids auf das Verschlusselement (13) ausgeübten Kräfte umfasst.

## Claims

1. An electronically controlled expansion valve (1), of the type including a controlled valve (10) inserted between a source (2) of fluid at a first pressure (P1) and an outlet (3) of fluid at a second pressure (P2), the second pressure being lower than the first pressure, a pressure sensor (9) adapted to measure the second pressure and a control computer (7) adapted to control the valve (10) such that the valve generates a pressure drop between the fluid source and the outlet making it possible to slave the second pressure (P2) to a set pressure ($P_{ref}$);

   - the controlled valve (10) comprising an actuator (14) adapted to restrict a fluid passage section (11), between the source (2) and the fluid outlet (3), so as to vary said passage section,
   - the restriction being carried out by means of a fluid passage orifice (12) and a shutter member (13) placed in the axis of the orifice and arranged so that an axial displacement of the shutter member (13) causes a variation in the fluid passage section,
   - the shutter member (31) being driven by the actuator (14),
   - the expansion valve (1) including a position sensor (19) of the shutter member (13),

   **characterized in that** the control computer (7) is adapted to converge, according to a first control law (LC1), the position ($X_1$) of the shutter member (13) towards a set position ($Y_r$), the set position ($Y_r$) being determined by a second control law (LC2) to converge the second pressure (P2) towards the set pressure ($P_{ref}$), on the basis of a model (MD) of a flow rate ($D_{col}$) of the expansion valve (1), the flow rate ($D_{col}$) of the expansion valve being the flow rate of the fluid flowing through the passage section between the expansion valve (1) and the fluid outlet (3), said model (MD) of the flow rate ($D_{col}$) of the expansion valve being defined as a function of the position ($X_1$) of the shutter member (13), said second control law (LC2) being further determined on the basis of a model (MP) of the second pressure (P2) as a function of the flow rate ($D_{col}$) of the expansion valve and of a consumption flow rate ($D_s$) downstream of the fluid outlet (3).

2. The expansion valve (1) according to claim 1, wherein the dynamics of the shutter member are not taken into account, in other words wherein the first control law (LC1) is such that the position ($X_1$) of the shutter member (13) is equal to the set position ($Y_r$), and wherein the model (MP) of the second pressure (P2) is a linear model, without saturation of the flow rate.

3. The expansion valve (1) according to claim 1, wherein the dynamics of the shutter member are not taken into account, in other words wherein the first control law (LC1) is such that the position ($X_1$) of the shutter member (13) is equal to the set position ($Y_r$), and wherein the model (MP) of the second pressure (P2) is a linear model, with saturation of the flow rate.

4. The expansion valve (1) according to claim 1, wherein the second control law is a saturated proportional-integral type law, and wherein the model (MP) of the second pressure (P2) is a linear model with saturation of the flow rate.

5. The expansion valve (1) according to claim 1, wherein the second control law is a saturated proportional-integral type law, and wherein the model (MP) of the second pressure (P2) is a non-linear model with saturation of the flow rate.

6. The expansion valve (1) according to any of claims 1 to 4, wherein the actuator (14) is a variable-reluctance electromagnetic actuator comprising a fixed ferromagnetic armature (15), a magnetization winding (16) secured to this armature and a mobile assembly (17) in alternative translations, secured to the shutter member (13), the actuator being arranged so that a displacement of the mobile assembly causes an axial displacement of the shutter member relative to the fluid passage orifice (12), the first control law (LC1) being determined to converge the position ($X_1$) towards the set position ($Y_r$) by applying a voltage (U) to the terminals of the winding (16) to produce a desired magnetic force ($F_d$) applied to the mobile assembly so as to cause the axial displacement of the shutter member (13) towards the set position ($Y_r$).

7. The expansion valve (1) according to claim 4, wherein the first control law (LC1) is based on a first unsaturated model for calculating the desired magnetic force ($F_d$), the first unsaturated model not taking into account a magnetic saturation of the ferromagnetic armature (15).

8. The expansion valve (1) according to claim 4, wherein the first control law is based on a second unsaturated model for calculating the desired magnetic force ($F_d$), the second unsaturated model taking into account a spreading of the field lines in a space comprised between the ferromagnetic armature (15) and the mobile assembly (17).

9. The expansion valve (1) according to claim 4, wherein the first control law is based on a saturated model for calculating the desired magnetic force ($F_d$), the saturated model taking into account the magnetic saturation of the ferromagnetic armature (15), and a spreading of the field lines in a space comprised between the ferromagnetic armature (15) and the mobile assembly (17).

10. The expansion valve (1) according to claim 9, wherein the saturated model for calculating the desired magnetic force (Fd) comprises a first part of the model applicable when a current flowing in the magnetization winding 16 is less than a saturation current, and a second part of the model applicable when the current is greater than the saturation current, the second part of the model being identified from measurements of the desired magnetic force (Fd) carried out, for different values of the current greater than the saturation current, during a phase of identifying the second part of the model.

11. The expansion valve (1) according to any of claims 1 to 9, wherein the first control law further comprises an integral effect for limiting noise due to a reconstruction of a speed of the shutter member estimated from the measured position of the shutter member (13).

12. The expansion valve (1) according to any of claims 1 to 10, wherein the first control law further comprises an integral effect for compensating for a modeling error.

13. The expansion valve according to any of claims 6 to 11, **characterized in that** it further includes an elastic device (18) adapted to return the shutter member (13) to a position such that the mobile assembly (17) is distant from the fixed ferromagnetic armature (15).

14. The expansion valve according to any of claims 1 to 12, **characterized in that** it includes a device (20, 21, 22) for at least partially compensating the forces exerted by the pressure of the fluid on the shutter member (13).

# Fig. 1

# Fig. 2

## Fig. 3

## Fig. 4

## Fig. 5

# Fig. 6

# Fig. 7

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 3007855 A1